# EUROPEAN PATENT APPLICATION

(11) **EP 4 510 661 A1**
(43) Date of publication of application: **19.02.2025**
(21) Application number: 22936975.6
(22) Date of filing: 15.04.2022
(51) Int. Cl.: H04W 8/24

(54) **WIRELESS TRANSMISSION METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: MU, Qin, Beijing 100085 (CN); QIAO, Xuemei, Beijing 100085 (CN)
(74) Representative: Dehns Germany Partnerschaft mbB
(86) International application number: PCT/CN2022/087230
(87) International publication number: WO 2023/197330

(57) **Abstract**

Provided in the embodiments of the present disclosure is a wireless transmission method. The method is executed by a terminal, and the method comprises: on the basis of configuration information, determining a threshold value of a signal transmission quality for a terminal to execute small data transmission (SDT), wherein the configuration information indicates the threshold value for at least one type of terminal, in terminals supporting coverage enhancement (CE) and terminals not supporting CE in a network supporting CE, to execute the SDT.

## Description

### TECHNICAL FIELD

The present disclosure relates to, but is not limited to, the field of wireless communication technology, and in particular to wireless transmission methods and apparatuses, a communication device, and a storage medium.

### BACKGROUND

In order to reduce waste of time-frequency resources, shorten data transmission delay, and save terminal energy consumption, a scheme of supporting small data transmission (SDT) in a radio resource control (RRC) inactive state is proposed. In a SDT scenario, a terminal can complete data transmission without entering a RRC connected state.

In related technologies, signal coverage of the terminal can be enhanced. How the SDT adapts to the transmission scenario after signal enhancement is a problem that needs to be considered.

### SUMMARY

The embodiments of the present disclosure disclose wireless transmission methods and apparatuses, a communication device, and a storage medium.

According to a first aspect of the embodiments of the present disclosure, there is provided a wireless transmission method, performed by a terminal. The method includes:
based on configuration information, determining a threshold value of signal transmission quality for the terminal to perform small data transmission (SDT);
where the configuration information indicates the threshold value for at least one type of terminal among terminals supporting coverage enhancement (CE) and terminals not supporting CE in a network supporting CE to perform the SDT.

In one embodiment, the configuration information indicates at least one of:
a first threshold value of the signal transmission quality for the terminals supporting CE in a network supporting CE to perform the SDT in a random access based SDT manner;
a second threshold value of the signal transmission quality for the terminals not supporting CE in a network supporting CE to perform the SDT in a random access based SDT manner; where the first threshold value is smaller than the second threshold value;
a third threshold value of the signal transmission quality for the terminals supporting CE in a network supporting CE to perform the SDT in a configured grant based SDT manner; or
a fourth threshold value of the signal transmission quality for the terminals not supporting CE in a network supporting CE to perform the SDT in a configured grant based SDT manner; where the third threshold value is smaller than the fourth threshold value.

In one embodiment, the network supporting CE includes a network supporting transmission of uplink data channels in a repetition manner during the SDT.

In one embodiment, the terminals supporting CE include terminals that at least support transmission of uplink data channels in a repetition sending manner.

In one embodiment, the method further includes:
determining the configuration information based on a communication protocol;
   or,
receiving the configuration information sent by an access network device.

In one embodiment, receiving the configuration information sent by the access network device includes:
receiving the configuration information sent by the access network device through predetermined signaling;
where the predetermined signaling includes one of:
remaining minimum system information (RMSI);
a master information block (MIB);
a radio resource control (RRC) message;
other system information (OSI);
downlink control information (DCI); or
a media access control (MAC) control element (CE).

In one embodiment, where the terminal is a terminal supporting CE; and the method further includes:
in response to determining that the measured signal transmission quality of a synchronization signal is greater than a first threshold value, performing the SDT in a 4-step random access based SDT manner.

In one embodiment, the configuration information further indicates a fifth threshold value; where performing the SDT in the 4-step random access based SDT manner includes:
in response to determining that the measured signal transmission quality of the synchronization signal is less than the fifth threshold value and a size of a third message (msg3) is greater than a predetermined value, performing random access based on preamble resources in a group B;
   or,
in response to the terminal supporting CE determining that the measured signal transmission quality of the synchronization signal is greater than the fifth threshold value and/or the size of the msg3 is less than the predetermined value, performing random access based on preamble resources in a group A.

In one embodiment, the terminal is a terminal supporting CE; the configuration information further indicates a sixth threshold value; and the method further includes:
in response to determining that the measured signal transmission quality of the synchronization signal is less than the sixth threshold value, enabling repetition transmission during performing the SDT in the 4-step random access based SDT manner;
   or,
in response to determining that the measured signal transmission quality of the synchronization signal is greater than the sixth threshold value, disabling repetition transmission during performing the SDT in the 4-step random access based SDT manner.

In one embodiment, the sixth threshold value is greater than or equal to a threshold value of the signal transmission quality for the terminals not supporting CE to perform the SDT in the 4-step random access based SDT manner.

In one embodiment, the terminal is a terminal supporting CE; and the method further includes:
in response to determining that the measured signal transmission quality of a synchronization signal is greater than a third threshold value, performing the SDT in a configured grant based SDT manner.

In one embodiment, the terminal is a terminal supporting CE; the configuration information further indicates a seventh threshold value; and the method further includes:
in response to determining that the measured signal transmission quality of the synchronization signal is less than the seventh threshold value, enabling repetition transmission during performing the SDT in the configured grant based SDT manner;
   or,
in response to determining that the measured signal transmission quality of the synchronization signal is greater than the seventh threshold value, disabling repetition transmission during performing the SDT in the configured grant based SDT manner.

In one embodiment, the seventh threshold value is greater than or equal to a threshold value of the signal transmission quality for the terminals not supporting CE to perform the SDT in the configured grant based SDT manner.

According to a second aspect of the embodiments of the present disclosure, there is provided a wireless transmission method, performed by an access network device. The method includes:
sending configuration information to a terminal;
where the configuration information indicates a threshold value for at least one type of terminal among terminals supporting coverage enhancement (CE) and terminals not supporting CE in a network supporting CE to perform small data transmission (SDT).

In one embodiment, the configuration information indicates at least one of:
a first threshold value of the signal transmission quality for the terminals supporting CE in a network supporting CE to perform the SDT in a random access based SDT manner;
a second threshold value of the signal transmission quality for the terminals not supporting CE in a network supporting CE to perform the SDT in a random access based SDT manner; where the first threshold value is smaller than the second threshold value;
a third threshold value of the signal transmission quality for the terminals supporting CE in a network supporting CE to perform the SDT in a configured grant based SDT manner; or
a fourth threshold value of the signal transmission quality for the terminals not supporting CE in a network supporting CE to perform the SDT in a configured grant based SDT manner; where the third threshold value is smaller than the fourth threshold value.

In one embodiment, the network supporting CE includes a network supporting transmission of uplink data channels in a repetition manner during the SDT.

In one embodiment, the terminals supporting CE include terminals that at least support transmission of uplink data channels in a repetition sending manner.

In one embodiment, sending the configuration information to the terminal includes:
sending the configuration information to the terminal through predetermined signaling;
where the predetermined signaling includes one of:
remaining minimum system information (RMSI);
a master information block (MIB);
a radio resource control (RRC) message;
other system information (OSI);
downlink control information (DCI); or
a media access control (MAC) control element (CE).

In one embodiment, the configuration information further indicates a fifth threshold value; where the fifth threshold value is a threshold value for the terminals supporting CE to select a group of preamble resources for performing random access; where the group of preamble resources includes a group A and a group B.

In one embodiment, the configuration information further indicates a sixth threshold value; where the sixth threshold value is a threshold value for the terminals supporting CE to enable or disable repetition transmission during performing the SDT in a 4-step random access based SDT manner.

In one embodiment, the sixth threshold value is greater than or equal to a threshold value of the signal transmission quality for the terminals not supporting CE to perform the SDT in the 4-step random access based SDT manner.

In one embodiment, the configuration information further indicates a seventh threshold value; where the seventh threshold value is a threshold value for the terminals supporting CE to enable or disable repetition transmission during performing the SDT in a configured grant based SDT manner.

In one embodiment, the seventh threshold value is greater than or equal to a threshold value of the signal transmission quality for the terminals not supporting CE to perform the SDT in the configured grant based SDT manner.

According to a third aspect of the embodiments of the present disclosure, there is provided a wireless transmission apparatus. The apparatus includes:
a determining module, configured to determine, based on configuration information, a threshold value of signal transmission quality for a terminal to perform small data transmission (SDT);
where the configuration information indicates the threshold value for at least one type of terminal among terminals supporting coverage enhancement (CE) and terminals not supporting CE in a network supporting CE to perform the SDT.

According to a fourth aspect of the embodiments of the present disclosure, there is provided a wireless transmission apparatus. The apparatus includes:
a sending module, configured to send configuration information to a terminal;
where the configuration information indicates a threshold value for at least one type of terminal among terminals supporting coverage enhancement (CE) and terminals not supporting CE in a network supporting CE to perform small data transmission (SDT).

According to a fifth aspect the embodiments of the present disclosure, there is provided a communication device. The communication device includes:
one or more processors;
a memory configured to store instructions executable by the one or more processors;
where the one or more processors are configured to implements any of the methods described in the embodiments of the present disclosure when running the instructions.

According to a sixth aspect of embodiments of the present disclosure, there is provided a computer storage medium, which stores a computer executable program that, when executed by a processor, implements any of the methods described in the embodiments of the present disclosure.

In the embodiment of the present disclosure, based on configuration information, a threshold value of signal transmission quality for the terminal to perform SDT is determined; where the configuration information indicates the threshold value for at least one type of terminal among terminals supporting CE and terminals not supporting CE in a network supporting CE to perform the SDT. Here, since the configuration information can indicate threshold values of the signal transmission quality for the terminals supporting CE and the terminals not supporting CE to perform the SDT, based on the configuration information, the terminal can determine the threshold value of the signal transmission quality for performing the SDT based on the result of whether the terminal supports CE, which has strong adaptability. Compared to configuring the same threshold value for the terminals supporting CE and the terminals not supporting CE, the terminals supporting CE can perform the SDT in case of lower signal transmission quality, and the capability of the terminals supporting CE to perform the SDT is improved.

### BRIEF DESCRIPTION OF THE DRAWINGS

FIG. 1 is a schematic structural diagram of a wireless communication system according to an exemplary embodiment.
FIG. 2 is a schematic diagram of a threshold setting according to an exemplary embodiment.
FIG. 3 is a flowchart of a wireless transmission method according to an exemplary embodiment.
FIG. 4 is a flowchart of a wireless transmission method according to an exemplary embodiment.
FIG. 5 is a flowchart of a wireless transmission method according to an exemplary embodiment.
FIG. 6 is a flowchart of a wireless transmission method according to an exemplary embodiment.
FIG. 7 is a flowchart of a wireless transmission method according to an exemplary embodiment.
FIG. 8 is a flowchart of a wireless transmission method according to an exemplary embodiment.
FIG. 9 is a flowchart of a wireless transmission method according to an exemplary embodiment.
FIG. 10 is a flowchart of a wireless transmission method according to an exemplary embodiment.
FIG. 11 is a flowchart of a wireless transmission method according to an exemplary embodiment.
FIG. 12 is a flowchart of a wireless transmission method according to an exemplary embodiment.
FIG. 13 is a schematic diagram of a wireless transmission apparatus according to an exemplary embodiment.
FIG. 14 is a schematic diagram of a wireless transmission apparatus according to an exemplary embodiment.
FIG. 15 is a schematic structural diagram of a terminal according to an exemplary embodiment.
FIG. 16 is a block diagram of a base station according to an exemplary embodiment.

### DETAILED DESCRIPTION OF THE EMBODIMENTS

The exemplary embodiments will be described in detail herein, and examples thereof are shown in accompanying drawings. When the following descriptions refer to the accompanying drawings, unless otherwise indicated, the same numbers in different drawings represent the same or similar elements. The implementations described in the following exemplary embodiments do not represent all the implementations consistent with the embodiments of the present disclosure. Rather, they are merely examples of the apparatus and method consistent with some aspects of the embodiments of the present disclosure as detailed in the appended claims.

Terms used in the embodiments of the present disclosure are for the purpose of describing specific embodiments only, and are not intended to limit the embodiments of the present disclosure. The singular forms "a", "an" and "this" used in the embodiments of the present disclosure and the appended claims are also intended to include plural forms, unless the context clearly indicates other meanings. It should also be understood that the term "and/or" as used herein refers to and includes any and all possible combinations of one or more of the associated listed items.

It should be understood that although terms first, second, third, etc. may be used in the embodiments of the present disclosure to describe various information, such information should not be limited to these terms. These terms are only used to distinguish the same type of information from each other. For example, first information may also be referred to as second information, and similarly, the second information may also be referred to as the first information without departing from the scope of the present disclosure. Depending on the context, the word "if" as used herein can be interpreted as "at the time of', "when" or "in response to determining".

For the purpose of brevity and ease of understanding, the term "greater than" or "less than" is used herein when characterizing the relationship of magnitudes. However, for those skilled in the art, it can be understood that the term "greater than" also covers the meaning of "greater than or equal to", and the term "less than" also covers the meaning of "less than or equal to".

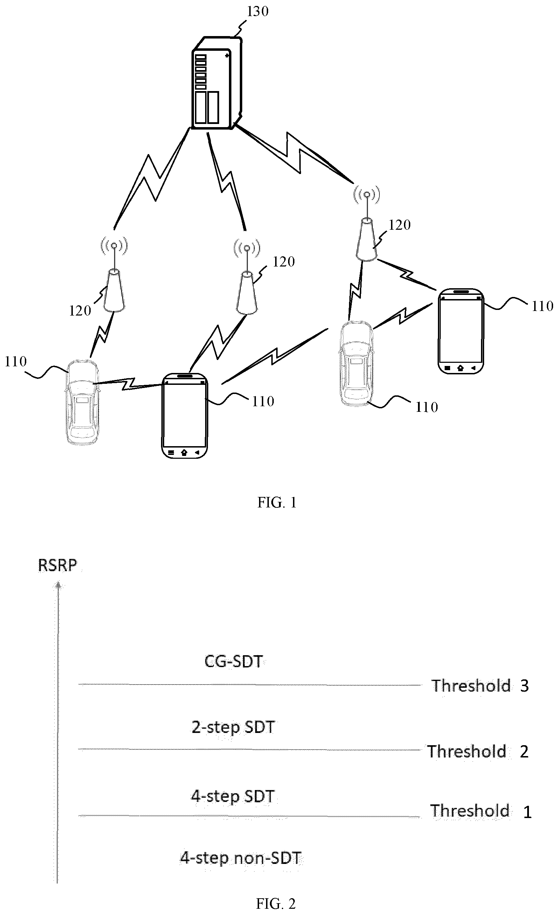

Referring to FIG. 1, FIG. 1 is a schematic structural diagram showing a wireless communication system provided in an embodiment of the present disclosure. As shown in FIG. 1, the wireless communication system is a communication system based on cellular mobile communication technology, and may include several user equipment (UEs) 110 and several base stations 120.

The UE 110 may be a device that provides voice and/or data connectivity to a user. The UE 110 may communicate with one or more core networks via a radio access network (RAN). The UE 110 may be an Internet of Things UE, such as a sensor device, a mobile phone and a computer with an Internet of Things UE. For example, the UE 110 may be a fixed, portable, pocket-sized, handheld, built-in computer or vehicle-mounted apparatus, for example, a station (STA), a subscriber unit, a subscriber station, a mobile station, a mobile, a remote station, an access point, a remote terminal, an access terminal, a user terminal, a user agent, a user device, or user equipment (UE). Or, the UE 110 may be a device of an unmanned aerial vehicle. Or, the UE 110 may be a vehicle-mounted device, for example, a driving computer with a wireless communication function, or a wireless communication device externally connected with a driving computer. Or, the UE 110 may be a roadside device, such as a street lamp, a signal lamp or other roadside devices with a wireless communication function.

The base station 120 may be a network side device in the wireless communication system. The wireless communication system may be a 4th generation mobile communication (4G) system, also referred to as a long term evolution (LTE) system. Or, the wireless communication system may be a 5G system, also referred to as a new radio (NR) system or a 5G NR system. Or, the wireless communication system may be a next generation system of the 5G system. The access network in the 5G system may be referred to as a new generation-radio access network (NG-RAN).

The base station 120 may be an evolved base station (eNB) used in the 4G system. Or, the base station 120 may be a centralized distributed architecture base station (gNB) used in the 5G system. When the base station 120 adopts the centralized distributed architecture, it usually includes a central unit (CU) and at least two distributed units (DUs). A protocol stack of a packet data convergence protocol (PDCP) layer, a radio link control (RLC) layer and a media access control (MAC) layer is provided in the central unit. A protocol stack of a physical (PHY) layer is provided in the distributed unit. The specific implementation of the base station 120 is not limited in the embodiments of the present disclosure.

A wireless connection may be established between the base station 120 and the UE 110 through a wireless radio. In different embodiments, the wireless radio is a wireless radio based on the 4th generation mobile communication network technology (4G) standard. Or, the wireless radio is a wireless radio based on the 5th generation mobile communication network technology (5G) standard. For example, the wireless radio is a new radio. Or, the wireless radio may also be a wireless radio based on the next generation mobile communication network technology standard of the 5G.

In some embodiments, an end to end (E2E) connection may also be established between UEs 110, for example, a vehicle to vehicle (V2V) communication, a vehicle to infrastructure (V2I) communication and a vehicle to pedestrian (V2P) communication in a vehicle to everything (V2X) communication.

Herein, the above-mentioned UE can be considered as the terminal of the following embodiments.

In some embodiments, the above wireless communication system may further include a network management device 130.

Several base stations 120 are connected to the network management device 130, respectively. The network management device 130 may be a core network device in the wireless communication system. For example, the network management device 130 may be a mobility management entity (MME) in an evolved packet core (EPC). Or, the network management device can also be other core network device, for example, a serving gateway (SGW), a public data network gateway (PGW), a policy and charging rules function (PCRF) or a home subscriber server (HSS), etc. The implementation form of the network management device 130 is not limited in the embodiments of the present disclosure.

In order to facilitate those skilled in the art to understand, the embodiments of the present disclosure enumerate implementation manners to clearly illustrate the technical solutions of the embodiments of the present disclosure. Of course, those skilled in the art can understand that the embodiments provided in the present disclosure can be executed independently, or can be combined with the methods of other embodiments of the present disclosure to be executed together, or can be executed together with some methods in other related technologies after being executed alone or being combined, which is limited in the embodiments of the present disclosure.

In order to better understand the technical solution described in any embodiment of the present disclosure, firstly, application scenarios in related technologies are described.

In one scenario embodiment, a solution of supporting small data transmission (SDT) in a radio resource control (RRC) inactive state is proposed, that is, a terminal can complete the small data transmission without entering a RRC connection state, thereby reducing the waste of time-frequency resources, shortening the data transmission delay and saving the energy consumption of the terminal.

In one embodiment, the small data transmission supports two manners, namely, a random access procedure based SDT and a configured grant (CG) based SDT. The configured grant based SDT means that when a base station changes from the RRC connection state to the RRC inactive state, semi-static time-frequency domain resource allocation information and timing advance (TA) information required for the SDT are carried in RRC resume or release messages. When the terminal has uplink data to transmit in the RRC inactive state, the terminal first determines a validity of the TA and a size of a data packet. When the threshold is met (for example, refer to a threshold 3 in FIG. 2), the small data transmission is performed using semi-static resources configured by the base station.

In one embodiment, the random access procedure based SDT is divided into two manners, namely, a 2-step random access based SDT and a 4-step random access based SDT. For the 2-step random access based SDT, a small data packet will be transmitted in a physical uplink share channel (PUSCH) resource of a random access message A (msgA); and for the 4-step random access based SDT, the small data packet will be carried in a third message (msg3). For a random access based SDT, it is also necessary to determine the size of the data packet. Only when the size of the data packet is less than a certain threshold value can the small data packet be transmitted in the random access procedure; otherwise, the small data packet needs to be transmitted after entering the connection state through the random access procedure. Besides the limitation of the size of the data packet, the terminal should compare a current synchronization signal reference signal received power (SS-RSRP) with a reference signal received power (RSRP) threshold before transmitting the small data packet. For example, refer to FIG. 2 again, only when the current SS-RSRP is greater than a RSRP threshold (that is, threshold 1 in FIG. 2), the transmission of the small data packet is performed. Herein, the purpose of comparing the RSRP threshold is to ensure that the SDT can only be carried out under good coverage conditions, so as to avoid wasting uplink transmission resources.

For the random access based SDT, whether to select the 2-step random access based SDT or the 4-step random access based SDT, it is also necessary to determine the RSRP threshold. That is, refer to FIG. 2 again, only when the SS-RSRP is greater than a RSRP threshold (that is, threshold 2 in FIG. 2), the terminal can use a 2-step random access manner to perform the SDT; otherwise, a 4-step random access manner is used to perform the SDT. Herein, the purpose of determining the RSRP threshold is to determine whether the terminal is located in a center of a cell, only when the terminal is close to the base station and a cyclic prefix (CP) can make up for the size of the TA, the terminal can use the 2-step random access manner to perform the SDT. Herein, the threshold 1 mentioned above is less than the threshold 2.

In one embodiment, a physical uplink shared channel repetition type A (PUSCH repetition type A) is introduced for transmission of the third message msg3 to enhance signal coverage of the third message msg3.

In one embodiment, only a single RSRP threshold is used to determine whether to perform the SDT for all terminals. However, due to the introduction of coverage enhancement (CE) function, it is hoped that even terminals with poor coverage at an edge of a cell can use the SDT to reduce power consumption and resource overhead, while reducing data transmission delay.

In related technologies, the influence of CE factors is not considered. Only a single RSRP threshold is used for the SDT using random access for terminals. If this single threshold is used for all terminals (terminals supporting CE and terminals not supporting CE), terminals with CE capability will be excluded from using the SDT at the edge of a cell.

In one embodiment, coverage enhancement is performed through msg3 repetition type A. after the introduction of msg3 repetition type A, msg3 inter-slot frequency hopping (inter-slot FH) becomes possible, and a frequency diversity gain can be obtained through the msg3 inter-slot FH mechanism. Thus, msg3 inter-slot FH becomes a key focus. Specifically, how to configure inter-slot FH related parameters for msg3 has become a key concern.

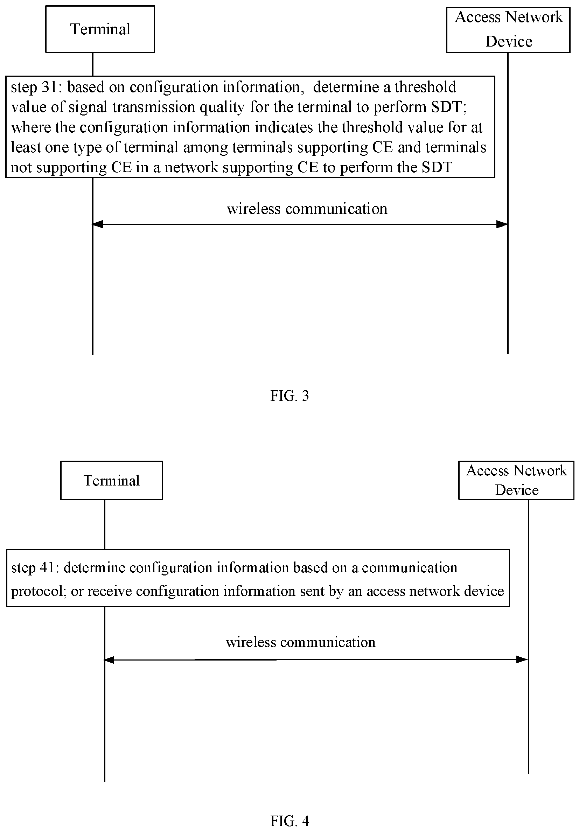

As shown in FIG. 3, this embodiment provides a wireless transmission method, performed by a terminal. The method includes step 31.

In step 31, based on configuration information, a threshold value of signal transmission quality for the terminal to perform SDT is determined.

The configuration information indicates the threshold value for at least one type of terminal among terminals supporting CE and terminals not supporting CE in a network supporting CE to perform the SDT.

The terminal involved in the present disclosure may be, but is not limited to, a mobile phone, a wearable device, a vehicle-mounted terminal, and a road side unit (RSU), a smart home terminal, an industrial sensing device, and/or a medical device, etc. In some embodiments, the terminal may be a RedCap terminal or a new radio (NR) terminal of a predetermined version (for example, a NR terminal of R17). It should be noted that the RedCap terminal can be an enhanced terminal (an eRedCap terminal).

The access network device involved in the present disclosure can be various types of base stations, for example, a base station of the 5th generation mobile communication network (5G) or other evolved base station.

In one embodiment, based on the configuration information, the threshold value of the signal transmission quality for the terminal to perform the SDT is determined. The configuration information indicates the threshold value for at least one type of terminal among the terminals supporting CE and the terminals not supporting CE in the network supporting CE to perform the SDT. The threshold value for the terminals supporting CE to perform the SDT is lower than the threshold value for the terminals not supporting CE to perform the SDT. It can be understood that threshold values for performing the SDT can be configured separately for the terminals supporting CE and the terminals not supporting CE, and the threshold values can be different.

In a scenario embodiment, the terminal can obtain the signal transmission quality (e.g., RSRP) of a synchronization signal before determining whether to perform the SDT, and compare the signal transmission quality with a threshold value of the signal transmission quality. Only when it is determined that the signal transmission quality is greater than the threshold value will the SDT be performed, otherwise the SDT will not be performed. In this way, the waste of resources can be reduced. Here, the signal transmission quality is used to indicate the transmission quality of a signal, which can be determined by at least one of the following parameters: reference signal receiving power (RSRP), received signal strength indicator (RSSI), reference signal receiving quality (RSRQ), or signal to interference plus noise ratio (SINR). It should be noted that determination of the signal transmission quality is not limited to the above parameters.

The small data packet in the present disclosure may be a data packet of which size is smaller than a predetermined threshold. The size of the data packet can be determined based on the number of bits in an information field occupied by the data packet during transmission. For example, if the number of bits in the information field occupied by a data packet during transmission is less than a quantity threshold, it is determined that the data packet is a small data packet.

In one embodiment, the SDT is performed in response to the measured signal transmission quality of the synchronization signal being greater than the threshold value of the signal transmission quality for the terminal to perform the SDT and the size of the data packet to be transmitted being less than a predetermined threshold. It should be noted that in the embodiments of the present disclosure, "less than" has the meaning of "less than or equal to" in certain scenarios, and "greater than" has the meaning of "greater than or equal to" in certain scenarios.

It should be noted that the threshold value of the signal transmission quality for the terminal to perform the SDT can be multiple. These multiple threshold values can be used to determine to perform the SDT using the corresponding transmission manner. For example, the threshold values may include an A threshold value, a B threshold value, and a C threshold value, where the C threshold value is less than the B threshold value and the B threshold value is less than the A threshold value. If the measured signal transmission quality of the synchronization signal is greater than the C threshold value and less than the B threshold value, the SDT is performed in a first transmission manner. Or, if the measured signal transmission quality of the synchronization signal is greater than the B threshold value and less than the A threshold value, the SDT is performed in a second transmission manner. Or, if the measured signal transmission quality of the synchronization signal is greater than the A threshold value, the SDT is performed in a third transmission manner. The first transmission manner can be a 4-step random access based SDT manner, the second transmission manner can be a 2-step random access based SDT manner, and the third transmission manner can be a configured grant based SDT manner.

It should be noted that threshold values of the signal transmission quality for performing the SDT configured for the terminals supporting CE and the terminals not supporting CE can be different. For example, a threshold value of the signal transmission quality for performing the SDT configured for the terminals supporting CE is a first threshold value; a threshold value of the signal transmission quality for performing the SDT configured for the terminals not supporting CE is a second threshold value; where the first threshold value is smaller than the second threshold value.

In one embodiment, the network supporting CE includes a network supporting transmission of uplink data channels in a repetition manner during the SDT. The repetition here can be repetition sending and/or repetition receiving.

In one embodiment, the terminals supporting CE include terminals that at least support transmission of uplink data channels in a repetition sending manner. For example, the terminals supporting CE are terminals that perform coverage enhancement through msg3 repetition type A.

In one embodiment, the configuration information indicates at least one of the following:
a first threshold value of the signal transmission quality for the terminals supporting CE in a network supporting CE to perform the SDT in a random access based SDT manner;
a second threshold value of the signal transmission quality for the terminals not supporting CE in a network supporting CE to perform the SDT in a random access based SDT manner; where the first threshold value is smaller than the second threshold value;
a third threshold value of the signal transmission quality for the terminals supporting CE in a network supporting CE to perform the SDT in a configured grant based SDT manner; or
a fourth threshold value of the signal transmission quality for the terminals not supporting CE in a network supporting CE to perform the SDT in a configured grant based SDT manner; where the third threshold value is smaller than the fourth threshold value.

In one embodiment, based on configuration information, a threshold value of signal transmission quality for the terminal to perform SDT is determined; where the configuration information indicates a first threshold value of the signal transmission quality for the terminals supporting CE in a network supporting CE to perform the SDT in a random access based SDT manner. In the network supporting CE, in response to the terminal determining that the terminal is a terminal supporting CE and measured signal transmission quality of a synchronization signal is less than the first threshold value, it is determined to transmit data in a non-SDT manner. Or, in response to the terminal determining that the terminal is a terminal supporting CE and measured signal transmission quality of the synchronization signal is greater than the first threshold value, it is determined to transmit data in a SDT manner (for example, 4-step random access based SDT manner). It can be understood that the non-SDT manner can be a manner of data transmission using a RRC connection after the RRC connection is established.

In one embodiment, based on configuration information, a threshold value of signal transmission quality for the terminal to perform SDT is determined; where the configuration information indicates a second threshold value of the signal transmission quality for the terminals not supporting CE in a network supporting CE to perform the SDT in a random access based SDT manner; where the first threshold value is smaller than the second threshold value. In the network supporting CE, in response to the terminal determining that the terminal is a terminal not supporting CE and measured signal transmission quality of a synchronization signal is less than the second threshold value, it is determined to transmit data in a non-SDT manner. Or, in response to the terminal determining that the terminal is a terminal not supporting CE and measured signal transmission quality of the synchronization signal is greater than the second threshold value, it is determined to transmit data in a SDT manner.

In one embodiment, it is determined that a small data packet is to be transmitted by the terminal; based on configuration information, a threshold value of signal transmission quality for the terminal to perform SDT is determined; where the configuration information indicates: a first threshold value of the signal transmission quality for the terminals supporting CE in a network supporting CE to perform the SDT in a random access based SDT manner; and a second threshold value of the signal transmission quality for the terminals not supporting CE in a network supporting CE to perform the SDT in a random access based SDT manner; where the first threshold value is smaller than the second threshold value. In the network supporting CE, the SDT is performed based on a determination result of whether the terminal supports CE and corresponding threshold values. For example, if the terminal is a terminal supporting CE and measured signal transmission quality of a synchronization signal is less than the first threshold value, it is determined to transmit data in a non-SDT manner. Or, in response to the terminal determining that the terminal is a terminal supporting CE and measured signal transmission quality of the synchronization signal is greater than the first threshold value, it is determined to transmit data in a SDT manner. Or, in response to the terminal determining that the terminal is a terminal not supporting CE and measured signal transmission quality of the synchronization signal is less than the second threshold value, it is determined to transmit data in a non-SDT manner. Or, in response to the terminal determining that the terminal is a terminal not supporting CE and measured signal transmission quality of the synchronization signal is greater than the second threshold value, it is determined to transmit data in a SDT manner.

In one embodiment, configuration information is determined based on a communication protocol; based on the configuration information, a threshold value of signal transmission quality for the terminal to perform SDT is determined; where the configuration information indicates at least one of the following:
a first threshold value of the signal transmission quality for the terminals supporting CE in a network supporting CE to perform the SDT in a random access based SDT manner;
a second threshold value of the signal transmission quality for the terminals not supporting CE in a network supporting CE to perform the SDT in a random access based SDT manner; where the first threshold value is smaller than the second threshold value;
a third threshold value of the signal transmission quality for the terminals supporting CE in a network supporting CE to perform the SDT in a configured grant based SDT manner; or
a fourth threshold value of the signal transmission quality for the terminals not supporting CE in a network supporting CE to perform the SDT in a configured grant based SDT manner; where the third threshold value is smaller than the fourth threshold value.

In one embodiment, configuration information sent by an access network device is received; based on the configuration information, a threshold value of signal transmission quality for the terminal to perform SDT is determined; where the configuration information indicates at least one of the following:
a first threshold value of the signal transmission quality for the terminals supporting CE in a network supporting CE to perform the SDT in a random access based SDT manner;
a second threshold value of the signal transmission quality for the terminals not supporting CE in a network supporting CE to perform the SDT in a random access based SDT manner; where the first threshold value is smaller than the second threshold value;
a third threshold value of the signal transmission quality for the terminals supporting CE in a network supporting CE to perform the SDT in a configured grant based SDT manner; or
a fourth threshold value of the signal transmission quality for the terminals not supporting CE in a network supporting CE to perform the SDT in a configured grant based SDT manner; where the third threshold value is smaller than the fourth threshold value.

In some embodiments, the configuration information sent by the access network device can be received through predetermined signaling.

The predetermined signaling includes one of the following:
remaining minimum system information (RMSI);
a master information block (MIB);
a radio resource control (RRC) message;
other system information (OSI);
downlink control information (DCI); or
a media access control (MAC) control element (CE).

In one embodiment, based on configuration information, a threshold value of signal transmission quality for the terminal to perform SDT is determined; where the configuration information includes an indication of a first threshold value of the signal transmission quality for the terminals supporting CE in a network supporting CE to perform the SDT in a random access based SDT manner. In the network supporting CE, in response to determining that measured signal transmission quality of a synchronization signal is greater than the first threshold value, the SDT is performed in a 4-step random access manner.

In one embodiment, based on configuration information, a threshold value of signal transmission quality for the terminal to perform SDT is determined; where the configuration information includes an indication of a first threshold value and a fifth threshold value of the signal transmission quality for the terminals supporting CE in a network supporting CE to perform the SDT in a random access based SDT manner. In the network supporting CE, in response to determining that the measured signal transmission quality of the synchronization signal is greater than the first threshold value, less than the fifth threshold value, and a size of a third message (msg3) is greater than a predetermined value, random access is performed based on preamble resources in a group B; and the small data packet is sent through msg3.

In one embodiment, based on configuration information, a threshold value of signal transmission quality for the terminal to perform SDT is determined; where the configuration information includes an indication of a first threshold value and a fifth threshold value of the signal transmission quality for the terminals supporting CE in a network supporting CE to perform the SDT in a random access based SDT manner. In the network supporting CE, in response to the terminal supporting CE determining that the measured signal transmission quality of the synchronization signal is greater than the first threshold value, and the signal transmission quality is greater than the fifth threshold value and/or a size of msg3 is less than a predetermined value, random access is performed based on preamble resources in a group A; and the small data packet is sent through msg3.

In one embodiment, based on configuration information, a threshold value of signal transmission quality for the terminal to perform SDT is determined; where the configuration information includes an indication of a first threshold value and a sixth threshold value of the signal transmission quality for the terminals supporting CE in a network supporting CE to perform the SDT in a random access based SDT manner. In the network supporting CE, in response to the terminal determining that the terminal is a terminal supporting CE and the measured signal transmission quality of a synchronization signal is greater than the first threshold value, it is determined to transmit data in a SDT manner. In response to determining that the measured signal transmission quality of the synchronization signal is less than the sixth threshold value, a repetition function is enabled. It should be noted that in response to determining that the measured signal transmission quality of the synchronization signal is greater than the sixth threshold value, the repetition function is disabled. Here, the sixth threshold value is greater than or equal to a threshold value of the signal transmission quality for the terminals not supporting CE to perform the SDT.

In one embodiment, based on configuration information, a threshold value of signal transmission quality for the terminal to perform SDT is determined; where the configuration information indicates a third threshold value of the signal transmission quality for the terminals supporting CE in a network supporting CE to perform the SDT in a configured grant based SDT manner. In the network supporting CE, in response to the terminal determining that the terminal is a terminal supporting CE and the measured signal transmission quality of a synchronization signal is less than the third threshold value, it is determined to transmit data in a non configured grant based SDT manner. Or, in response to the terminal determining that the terminal is a terminal supporting CE and the measured signal transmission quality of the synchronization signal is greater than the third threshold value, it is determined to transmit data in a configured grant based SDT manner. The non configured grant based SDT manner can be the random access based SDT manner mentioned above.

In one embodiment, based on configuration information, a threshold value of signal transmission quality for the terminal to perform SDT is determined; where the configuration information indicates a fourth threshold value of the signal transmission quality for the terminals not supporting CE in a network supporting CE to perform the SDT in a configured grant based SDT manner; where the third threshold value is smaller than the fourth threshold value. In the network supporting CE, in response to the terminal determining that the terminal is a terminal not supporting CE and the measured signal transmission quality of the synchronization signal is less than the fourth threshold value, it is determined to transmit data in a non configured grant based SDT manner. Or, in response to the terminal determining that the terminal is a terminal not supporting CE and the measured signal transmission quality of the synchronization signal is greater than the fourth threshold value, it is determined to transmit data in a configured grant based SDT manner.

In one embodiment, it is determined that a small data packet is to be transmitted by the terminal; based on configuration information, a threshold value of signal transmission quality for the terminal to perform SDT is determined; where the configuration information indicates a third threshold value of the signal transmission quality for the terminals supporting CE in a network supporting CE to perform the SDT in a configured grant based SDT manner; and a fourth threshold value of the signal transmission quality for the terminals not supporting CE in a network supporting CE to perform the SDT in a configured grant based SDT manner; where the third threshold value is smaller than the fourth threshold value. In the network supporting CE, the SDT is performed based on a determination result of whether the terminal supports CE and corresponding threshold values. For example, if the terminal is a terminal supporting CE and measured signal transmission quality of a synchronization signal is less than the third threshold value, it is determined to transmit data in a non configured grant based SDT manner. Or, in response to the terminal determining that the terminal is a terminal supporting CE and the measured signal transmission quality of the synchronization signal is greater than the third threshold value, it is determined to transmit data in a configured grant based SDT manner. Or, in response to the terminal determining that the terminal is a terminal not support CE and the measured signal transmission quality of the synchronization signal is less than the fourth threshold value, it is determined to transmit data in a non configured grant based SDT manner. Or, in response to the terminal determining that the terminal is a terminal not support CE and the measured signal transmission quality of the synchronization signal is greater than the fourth threshold value, it is determined to transmit data in a configured grant based SDT manner.

In one embodiment, configuration information is determined based on a communication protocol; based on the configuration information, a threshold value of signal transmission quality for the terminal to perform SDT is determined; where the configuration information indicates at least one of the following: a third threshold value of the signal transmission quality for the terminals supporting CE in a network supporting CE to perform the SDT in a configured grant based SDT manner; or a fourth threshold value of the signal transmission quality for the terminals not supporting CE in a network supporting CE to perform the SDT in a configured grant based SDT manner; where the third threshold value is smaller than the fourth threshold value.

In one embodiment, configuration information sent by an access network device is received; based on the configuration information, a threshold value of signal transmission quality for the terminal to perform SDT is determined; where the configuration information indicates at least one of the following: a third threshold value of the signal transmission quality for the terminals supporting CE in a network supporting CE to perform the SDT in a configured grant based SDT manner; or a fourth threshold value of the signal transmission quality for the terminals not supporting CE in a network supporting CE to perform the SDT in a configured grant based SDT manner; where the third threshold value is smaller than the fourth threshold value.

In some embodiments, the configuration information sent by the access network device can be received through predetermined signaling.

The predetermined signaling includes one of the following:
remaining minimum system information (RMSI);
a master information block (MIB);
a radio resource control (RRC) message;
other system information (OSI);
downlink control information (DCI); or
a media access control (MAC) control element (CE).

In one embodiment, based on configuration information, a threshold value of signal transmission quality for the terminal to perform SDT is determined; where the configuration information includes an indication of a third threshold value of the signal transmission quality for the terminals supporting CE in a network supporting CE to perform the SDT in a configured grant based SDT manner. In the network supporting CE, in response to determining that measured signal transmission quality of a synchronization signal is greater than the third threshold value, the SDT is performed in a configured grant based SDT manner.

In one embodiment, based on configuration information, a threshold value of signal transmission quality for the terminal to perform SDT is determined; where the configuration information includes an indication of a third threshold value and a seven threshold value of the signal transmission quality for the terminals supporting CE in a network supporting CE to perform the SDT in a configured grant based SDT manner. In the network supporting CE, in response to the terminal determining that the terminal is a terminal supporting CE and the measured signal transmission quality of a synchronization signal is greater than the third threshold value, it is determined to transmit data in a random access based SDT manner. In response to determining that the measured signal transmission quality of the synchronization signal is less than the seventh threshold value, repetition transmission is enabled during performing the SDT in the configured grant based SDT manner. It should be noted that in response to determining that the measured signal transmission quality of the synchronization signal is greater than the seventh threshold value, repetition transmission is disabled during performing the SDT in the configured grant based SDT manner. Here, the seventh threshold value is greater than or equal to a threshold value of the signal transmission quality for the terminals not supporting CE to perform the SDT in a configured grant based SDT manner.

In the embodiment of the present disclosure, based on configuration information, a threshold value of signal transmission quality for the terminal to perform SDT is determined; where the configuration information indicates the threshold value for at least one type of terminal among terminals supporting CE and terminals not supporting CE in a network supporting CE to perform the SDT. Here, since the configuration information can indicate threshold values of the signal transmission quality for the terminals supporting CE and the terminals not supporting CE to perform the SDT, based on the configuration information, the terminal can determine the threshold value of the signal transmission quality for performing the SDT based on the result of whether the terminal supports CE, which has strong adaptability. Compared to configuring the same threshold value for the terminals supporting CE and the terminals not supporting CE, the terminals supporting CE can perform the SDT in case of lower signal transmission quality, and the capability of the terminals supporting CE to perform the SDT is improved.

It should be noted that those skilled in the art can understand that the methods provided in the embodiments of the present disclosure can be performed separately or together with some methods in the embodiments of the present disclosure or related technologies.

As shown in FIG. 4, this embodiment provides a wireless transmission method, performed by a terminal. The method includes step 41.

In step 41, configuration information is determined based on a communication protocol; or configuration information sent by an access network device is received.

In one embodiment, the configuration information is determined based on a communication protocol; where the configuration information indicates at least one of the following:
a first threshold value of the signal transmission quality for the terminals supporting CE in a network supporting CE to perform the SDT in a random access based SDT manner;
a second threshold value of the signal transmission quality for the terminals not supporting CE in a network supporting CE to perform the SDT in a random access based SDT manner; where the first threshold value is smaller than the second threshold value;
a third threshold value of the signal transmission quality for the terminals supporting CE in a network supporting CE to perform the SDT in a configured grant based SDT manner; or
a fourth threshold value of the signal transmission quality for the terminals not supporting CE in a network supporting CE to perform the SDT in a configured grant based SDT manner; where the third threshold value is smaller than the fourth threshold value. Based on the configuration information, a threshold value of signal transmission quality for the terminal to perform SDT is determined.

In one embodiment, configuration information sent by an access network device is received; where the configuration information indicates at least one of the following:
a first threshold value of the signal transmission quality for the terminals supporting CE in a network supporting CE to perform the SDT in a random access based SDT manner;
a second threshold value of the signal transmission quality for the terminals not supporting CE in a network supporting CE to perform the SDT in a random access based SDT manner; where the first threshold value is smaller than the second threshold value;
a third threshold value of the signal transmission quality for the terminals supporting CE in a network supporting CE to perform the SDT in a configured grant based SDT manner; or
a fourth threshold value of the signal transmission quality for the terminals not supporting CE in a network supporting CE to perform the SDT in a configured grant based SDT manner; where the third threshold value is smaller than the fourth threshold value.

In some embodiments, the configuration information sent by the access network device can be received through predetermined signaling.

The predetermined signaling includes one of the following:
remaining minimum system information (RMSI);
a master information block (MIB);
a radio resource control (RRC) message;
other system information (OSI);
downlink control information (DCI); or
a media access control (MAC) control element (CE).

It should be noted that those skilled in the art can understand that the methods provided in the embodiments of the present disclosure can be performed separately or together with some methods in the embodiments of the present disclosure or related technologies.

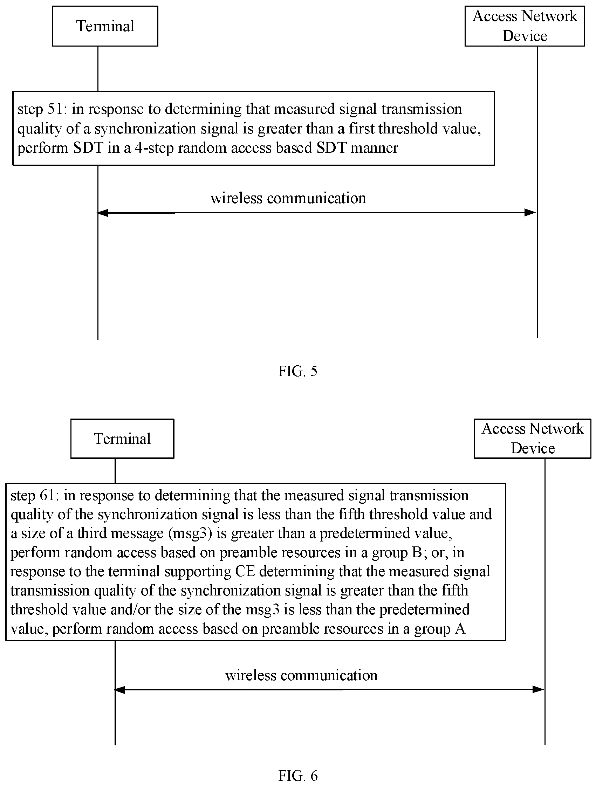

As shown in FIG. 5, this embodiment provides a wireless transmission method, performed by a terminal. The method includes step 51.

In step 51, in response to determining that measured signal transmission quality of a synchronization signal is greater than a first threshold value, SDT is performed in a 4-step random access based SDT manner.

In one embodiment, based on configuration information, a threshold value of signal transmission quality for the terminal to perform the SDT is determined; where the configuration information includes an indication of a first threshold value of the signal transmission quality for terminals supporting CE in a network supporting CE to perform the SDT in a random access based SDT manner. In the network supporting CE, in response to determining that measured signal transmission quality of the synchronization signal is greater than the first threshold value, the SDT is performed in a 4-step random access manner. In response to determining that the measured signal transmission quality of the synchronization signal is less than the first threshold value, data transmission is performed based on a non-SDT manner. It can be understood that the non-SDT manner can be a manner of data transmission using a RRC connection after the RRC connection is established.

It should be noted that those skilled in the art can understand that the methods provided in the embodiments of the present disclosure can be performed separately or together with some methods in the embodiments of the present disclosure or related technologies.

As shown in FIG. 6, this embodiment provides a wireless transmission method, performed by a terminal. The configuration information further indicates a fifth threshold value. The method includes step 61.

In step 61, in response to determining that the measured signal transmission quality of the synchronization signal is less than the fifth threshold value and a size of a third message (msg3) is greater than a predetermined value, random access is performed based on preamble resources in a group B;
or,
in response to the terminal supporting CE determining that the measured signal transmission quality of the synchronization signal is greater than the fifth threshold value and/or the size of the msg3 is less than the predetermined value, random access is performed based on preamble resources in a group A.

In one embodiment, based on the configuration information, a threshold value of signal transmission quality for the terminal to perform SDT is determined; where the configuration information includes an indication of a first threshold value and a fifth threshold value of the signal transmission quality for the terminals supporting CE in a network supporting CE to perform the SDT in a random access based SDT manner. In response to determining that the measured signal transmission quality of the synchronization signal is greater than the first threshold value, less than the fifth threshold value, and the size of the third message (msg3) is greater than a predetermined value, random access is performed based on preamble resources in a group B; and the small data packet is sent through msg3.

In one embodiment, based on the configuration information, a threshold value of signal transmission quality for the terminal to perform SDT is determined; where the configuration information includes an indication of a first threshold value and a fifth threshold value of the signal transmission quality for the terminals supporting CE in a network supporting CE to perform the SDT in a random access based SDT manner. In response to the terminal supporting CE determining that the measured signal transmission quality of the synchronization signal is greater than the first threshold value, and the signal transmission quality is greater than the fifth threshold value and/or the size of the msg3 is less than the predetermined value, random access is performed based on preamble resources in a group A; and the small data packet is sent through the msg3.

It should be noted that those skilled in the art can understand that the methods provided in the embodiments of the present disclosure can be performed separately or together with some methods in the embodiments of the present disclosure or related technologies.

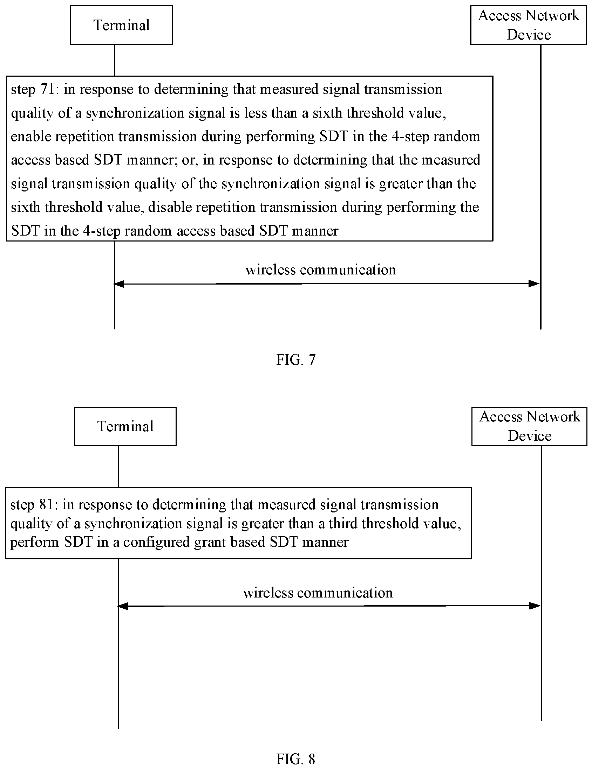

As shown in FIG. 7, this embodiment provides a wireless transmission method, performed by a terminal supporting CE. The method includes step 71.

In step 71, in response to determining that measured signal transmission quality of a synchronization signal is less than a sixth threshold value, repetition transmission is enabled during performing SDT in the 4-step random access based SDT manner; or, in response to determining that the measured signal transmission quality of the synchronization signal is greater than the sixth threshold value, repetition transmission is disabled during performing the SDT in the 4-step random access based SDT manner.

In one embodiment, based on configuration information, a threshold value of signal transmission quality for the terminal to perform the SDT is determined; where the configuration information includes an indication of a first threshold value and a sixth threshold value of the signal transmission quality for the terminals supporting CE in a network supporting CE to perform the SDT in a random access based SDT manner. In response to the terminal determining that the terminal is a terminal supporting CE and the measured signal transmission quality of the synchronization signal is greater than the first threshold value, it is determined to perform data transmission in the 4-step random access based SDT manner. In response to determining that the measured signal transmission quality of the synchronization signal is less than the sixth threshold value, repetition transmission is enabled during performing SDT in the 4-step random access based SDT manner. It should be noted that in response to determining that the measured signal transmission quality of the synchronization signal is greater than the sixth threshold value, repetition transmission is disabled during performing the SDT in the 4-step random access based SDT manner. Here, the sixth threshold value is greater than or equal to a threshold value of the signal transmission quality for the terminals not supporting CE to perform the SDT.

It should be noted that those skilled in the art can understand that the methods provided in the embodiments of the present disclosure can be performed separately or together with some methods in the embodiments of the present disclosure or related technologies.

As shown in FIG. 8, this embodiment provides a wireless transmission method, performed by a terminal supporting CE. The method includes step 81.

In step 81, in response to determining that measured signal transmission quality of a synchronization signal is greater than a third threshold value, SDT is performed in a configured grant based SDT manner.

In one embodiment, based on configuration information, a threshold value of signal transmission quality for the terminal to perform the SDT is determined; where the configuration information includes an indication of a third threshold value of the signal transmission quality for the terminals supporting CE in a network supporting CE to perform the SDT in a configured grant based SDT manner. In the network supporting CE, in response to determining that the measured signal transmission quality of the synchronization signal is greater than the third threshold value, the SDT is performed in a configured grant based SDT manner. In response to determining that the measured signal transmission quality of the synchronization signal is less than the third threshold value, data transmission is performed in a non configured grant based SDT manner.

It should be noted that those skilled in the art can understand that the methods provided in the embodiments of the present disclosure can be performed separately or together with some methods in the embodiments of the present disclosure or related technologies.

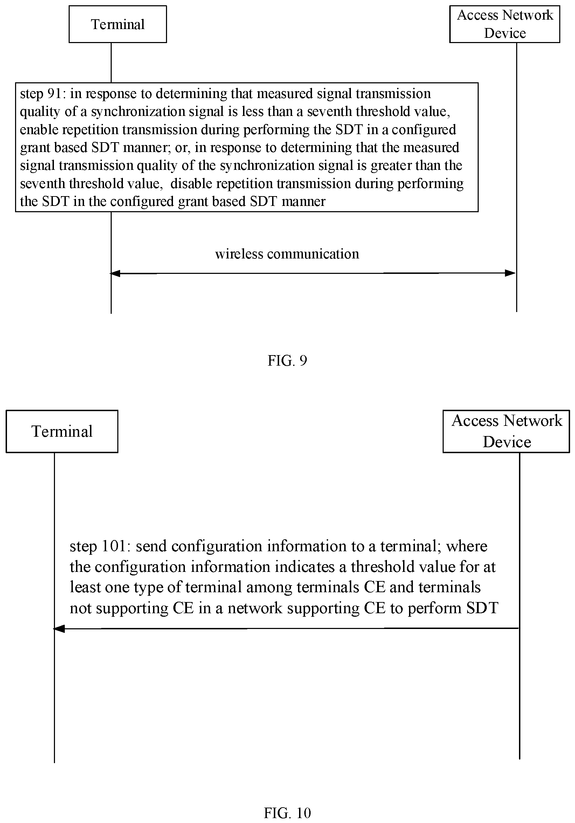

As shown in FIG. 9, this embodiment provides a wireless transmission method, performed by a terminal supporting CE. The method includes step 91.

In step 91, in response to determining that measured signal transmission quality of a synchronization signal is less than a seventh threshold value, repetition transmission is enabled during performing the SDT in a configured grant based SDT manner;
or,
in response to determining that the measured signal transmission quality of the synchronization signal is greater than the seventh threshold value, repetition transmission is disabled during performing the SDT in the configured grant based SDT manner.

In one embodiment, based on configuration information, a threshold value of signal transmission quality for the terminal to perform the SDT is determined; where the configuration information includes an indication of a third threshold value and a seven threshold value of the signal transmission quality for the terminals supporting CE in a network supporting CE to perform the SDT in a configured grant based SDT manner. In the network supporting CE, in response to the terminal determining that the terminal is a terminal supporting CE and the measured signal transmission quality of the synchronization signal is greater than the third threshold value, it is determined to perform data transmission in a configured grant based SDT manner. In response to determining that measured signal transmission quality of the synchronization signal is less than the seventh threshold value, repetition transmission is enabled during performing the SDT in the configured grant based SDT manner. It should be noted that in response to determining that the measured signal transmission quality of the synchronization signal is greater than the seventh threshold value, repetition transmission is disabled during performing the SDT in the configured grant based SDT manner. Here, the seventh threshold value is greater than or equal to a threshold value of the signal transmission quality for the terminals not supporting CE to perform the SDT in a configured grant based SDT manner.

It should be noted that those skilled in the art can understand that the methods provided in the embodiments of the present disclosure can be performed separately or together with some methods in the embodiments of the present disclosure or related technologies.

As shown in FIG. 10, this embodiment provides a wireless transmission method, performed by an access network device. The method includes step 101.

In step 101, configuration information is sent to a terminal.

The configuration information indicates a threshold value for at least one type of terminal among terminals supporting coverage enhancement (CE) and terminals not supporting CE in a network supporting CE to perform small data transmission (SDT).

The terminal involved in the present disclosure may be, but is not limited to, a mobile phone, a wearable device, a vehicle-mounted terminal, and a road side unit (RSU), a smart home terminal, an industrial sensing device, and/or a medical device, etc. In some embodiments, the terminal may be a RedCap terminal or a new radio (NR) terminal of a predetermined version (for example, a NR terminal of R17). It should be noted that the RedCap terminal can be an enhanced terminal (an eRedCap terminal).

The access network device involved in the present disclosure can be various types of base stations, for example, a base station of the 5th generation mobile communication network (5G) or other evolved base station.

In a scenario embodiment, the terminal can obtain signal transmission quality (e.g., RSRP) of a synchronization signal before determining whether to perform the SDT, and compare the signal transmission quality with a threshold value of the signal transmission quality. Only when it is determined that the signal transmission quality is greater than the threshold value will the SDT be performed, otherwise the SDT will not be performed. In this way, the waste of resources can be reduced. Here, the signal transmission quality is used to indicate the transmission quality of a signal, which can be determined by at least one of the following parameters: reference signal receiving power (RSRP), received signal strength indicator (RSSI), reference signal receiving quality (RSRQ), or signal to interference plus noise ratio (SINR).

The small data packet in the present disclosure may be a data packet of which size is smaller than a predetermined threshold. The size of the data packet can be determined based on the number of bits in an information field occupied by the data packet during transmission. For example, if the number of bits in the information field occupied by a data packet during transmission is less than a quantity threshold, it is determined that the data packet is a small data packet.

In one embodiment, in response to the measured signal transmission quality of the synchronization signal being greater than the threshold value of the signal transmission quality for the terminal to perform the SDT and the size of the data packet to be transmitted being less than a predetermined threshold, the terminal performs the SDT.

It should be noted that the threshold value of the signal transmission quality for the terminal to perform the SDT can be multiple. The access network device can send configuration information indicating the multiple threshold values to the terminal. These multiple threshold values can be used for the terminal to determine to perform the SDT using the corresponding transmission manner. For example, the threshold values may include an A threshold value, a B threshold value, and a C threshold value, where the C threshold value is less than the B threshold value and the B threshold value is less than the A threshold value. If the measured signal transmission quality of the synchronization signal is greater than the C threshold value and less than the B threshold value, the SDT is performed in a first transmission manner. Or, if the measured signal transmission quality of the synchronization signal is greater than the B threshold value and less than the A threshold value, the SDT is performed in a second transmission manner. Or, if the measured signal transmission quality of the synchronization signal is greater than the A threshold value, the SDT is performed in a third transmission manner. The first transmission manner can be a 4-step random access based SDT manner, the second transmission manner can be a 2-step random access based SDT manner, and the third transmission manner can be a configured grant based SDT manner.

It should be noted that threshold values of the signal transmission quality for performing the SDT configured for the terminals supporting CE and the terminals not supporting CE can be different. For example, a threshold value of the signal transmission quality for performing the SDT configured for the terminals supporting CE is a first threshold value; a threshold value of the signal transmission quality for performing the SDT configured for the terminals not supporting CE is a second threshold value; where the first threshold value is smaller than the second threshold value.

In one embodiment, the network supporting CE includes a network supporting transmission of uplink data channels in a repetition manner during the SDT. The repetition here can be repetition sending and/or repetition receiving.

In one embodiment, the terminals supporting CE include terminals that at least support transmission of uplink data channels in a repetition sending manner. For example, the terminals supporting CE are terminals that perform coverage enhancement through msg3 repetition type A.

In one embodiment, the configuration information indicates at least one of the following:
a first threshold value of the signal transmission quality for the terminals supporting CE in a network supporting CE to perform the SDT in a random access based SDT manner; a second threshold value of the signal transmission quality for the terminals not supporting CE in a network supporting CE to perform the SDT in a random access based SDT manner; where the first threshold value is smaller than the second threshold value;
a third threshold value of the signal transmission quality for the terminals supporting CE in a network supporting CE to perform the SDT in a configured grant based SDT manner; or
a fourth threshold value of the signal transmission quality for the terminals not supporting CE in a network supporting CE to perform the SDT in a configured grant based SDT manner; where the third threshold value is smaller than the fourth threshold value.

In one embodiment, the access network device sends configuration information to a terminal, where the configuration information indicates a first threshold value of the signal transmission quality for the terminals supporting CE in a network supporting CE to perform the SDT in a random access based SDT manner. In the network supporting CE, based on the configuration information, the terminal determines a threshold value of signal transmission quality for the terminal to perform the SDT. In response to the terminal determining that the terminal is a terminal supporting CE and measured signal transmission quality of a synchronization signal is less than the first threshold value, the terminal determines to perform data transmission in a non-SDT manner. Or, in response to the terminal determining that the terminal is a terminal supporting CE and measured signal transmission quality of the synchronization signal is greater than the first threshold value, the terminal determines to perform data transmission in a SDT manner. It can be understood that the non-SDT manner can be a manner of data transmission using a RRC connection after the RRC connection is established. It should be noted that in the embodiments of the present disclosure, "less than" has the meaning of "less than or equal to" in certain scenarios, and "greater than" has the meaning of "greater than or equal to" in certain scenarios.

In one embodiment, the access network device sends configuration information to a terminal, where the configuration information indicates: a first threshold value of the signal transmission quality for the terminals supporting CE in a network supporting CE to perform the SDT in a random access based SDT manner; a second threshold value of the signal transmission quality for the terminals not supporting CE in a network supporting CE to perform the SDT in a random access based SDT manner; where the first threshold value is smaller than the second threshold value. Based on the configuration information, the terminal determines a threshold value of signal transmission quality for the terminal to perform the SDT. In the network supporting CE, in response to the terminal determining that the terminal is a terminal not supporting CE and measured signal transmission quality of a synchronization signal is less than the second threshold value, the terminal determines to perform data transmission in a non-SDT manner. Or, in response to the terminal determining that the terminal is a terminal not supporting CE and measured signal transmission quality of the synchronization signal is greater than the second threshold value, the terminal determines to perform data transmission in a SDT manner.

In one embodiment, the access network device sends configuration information to a terminal, where the configuration information indicates: a first threshold value of the signal transmission quality for the terminals supporting CE in a network supporting CE to perform the SDT in a random access based SDT manner; a second threshold value of the signal transmission quality for the terminals not supporting CE in a network supporting CE to perform the SDT in a random access based SDT manner; where the first threshold value is smaller than the second threshold value. The terminal determines that a small data packet is to be transmitted by the terminal. Based on the configuration information, the terminal determines a threshold value of signal transmission quality for the terminal to perform the SDT. The SDT is performed based on a determination result of whether the terminal supports CE and corresponding threshold values. For example, if the terminal is a terminal supporting CE and measured signal transmission quality of a synchronization signal is less than the first threshold value, the terminal determines to perform data transmission in a non-SDT manner. Or, in response to the terminal determining that the terminal is a terminal supporting CE and measured signal transmission quality of the synchronization signal is greater than the first threshold value, the terminal determines to perform data transmission in a SDT manner (in a random access based SDT manner). Or, in response to the terminal determining that the terminal is a terminal not supporting CE and measured signal transmission quality of the synchronization signal is less than the second threshold value, the terminal determines to perform data transmission in a non-SDT manner. Or, in response to the terminal determining that the terminal is a terminal not supporting CE and measured signal transmission quality of the synchronization signal is greater than the second threshold value, the terminal determines to perform data transmission in a SDT manner.

In one embodiment, In one embodiment, the access network device sends configuration information to a terminal, where the configuration information indicates at least one of the following: a first threshold value of the signal transmission quality for the terminals supporting CE to perform the SDT; a second threshold value of the signal transmission quality for the terminals not supporting CE to perform the SDT; where the first threshold value is smaller than the second threshold value. Based on the configuration information, a threshold value of signal transmission quality for the terminal to perform the SDT is determined.

In some embodiments, the configuration information can be sent to the terminal through predetermined signaling.

The predetermined signaling includes one of the following:
remaining minimum system information (RMSI);
a master information block (MIB);
a radio resource control (RRC) message;
other system information (OSI);
downlink control information (DCI); or
a media access control (MAC) control element (CE).

In one embodiment, the access network device sends configuration information to a terminal, where the configuration information includes an indication of a first threshold value and a fifth threshold value of the signal transmission quality for the terminals supporting CE in a network supporting CE to perform the SDT in a random access based SDT manner. Based on the configuration information, the terminal determines a threshold value of signal transmission quality for the terminal to perform the SDT. In response to determining that the measured signal transmission quality of the synchronization signal is greater than the first threshold value, less than the fifth threshold value, and a size of a third message (msg3) is greater than a predetermined value, the terminal performs random access based on preamble resources in a group B; and the terminal sends the small data packet through msg3.

In one embodiment, configuration information is sent to a terminal, where the configuration information includes an indication of a first threshold value and a fifth threshold value of the signal transmission quality for the terminals supporting CE in a network supporting CE to perform the SDT in a random access based SDT manner. Based on the configuration information, the terminal determines a threshold value of signal transmission quality for the terminal to perform the SDT; where the configuration information includes the indication of the first threshold value and the fifth threshold value of the signal transmission quality for the terminals supporting CE to perform the SDT. In response to the terminal supporting CE determining that the measured signal transmission quality of the synchronization signal is greater than the first threshold value, and the signal transmission quality is greater than the fifth threshold value and/or a size of msg3 is less than a predetermined value, the terminal performs random access based on preamble resources in a group A; and the terminal sends the small data packet through msg3.

In one embodiment, configuration information is sent to a terminal, where the configuration information includes an indication of a first threshold value and a sixth threshold value of the signal transmission quality for the terminals supporting CE in a network supporting CE to perform the SDT in a random access based SDT manner. Based on the configuration information, the terminal determines a threshold value of signal transmission quality for the terminal to perform the SDT. In response to the terminal determining that the terminal is a terminal supporting CE and measured signal transmission quality of the synchronization signal is greater than the first threshold value, the terminal determines to perform data transmission in a SDT manner. In response to determining that the measured signal transmission quality of the synchronization signal is less than the sixth threshold value, the terminal enables a repetition function. It should be noted that in response to determining that the measured signal transmission quality of the synchronization signal is greater than the sixth threshold value, the terminal is disables the repetition function. Here, the sixth threshold value is greater than or equal to a threshold value of the signal transmission quality for the terminals not supporting CE to perform the SDT.

In one embodiment, the access network device sends configuration information to a terminal, where the configuration information indicates a third threshold value of the signal transmission quality for the terminals supporting CE in a network supporting CE to perform the SDT in a configured grant based SDT manner. In the network supporting CE, based on the configuration information, the terminal determines a threshold value of signal transmission quality for the terminal to perform the SDT. In response to the terminal determining that the terminal is a terminal supporting CE and the measured signal transmission quality of a synchronization signal is less than the third threshold value, the terminal determines to perform data transmission in a non configured grant based SDT manner. Or, in response to the terminal determining that the terminal is a terminal supporting CE and the measured signal transmission quality of the synchronization signal is greater than the third threshold value, the terminal determines to perform data transmission in a configured grant based SDT manner. It should be noted that in the embodiments of the present disclosure, "less than" has the meaning of "less than or equal to" in certain scenarios, and "greater than" has the meaning of "greater than or equal to" in certain scenarios.

In one embodiment, the access network device sends configuration information to a terminal, where the configuration information indicates a fourth threshold value of the signal transmission quality for the terminals not supporting CE in a network supporting CE to perform the SDT in a configured grant based SDT manner; where the third threshold value is smaller than the fourth threshold value. Based on the configuration information, the terminal determines a threshold value of signal transmission quality for the terminal to perform the SDT. In the network supporting CE, in response to the terminal determining that the terminal is a terminal not supporting CE and the measured signal transmission quality of the synchronization signal is less than the fourth threshold value, the terminal determines to perform data transmission in a non configured grant based SDT manner. Or, in response to the terminal determining that the terminal is a terminal not supporting CE and the measured signal transmission quality of the synchronization signal is greater than the fourth threshold value, the terminal determines to perform data transmission in a configured grant based SDT manner.

In one embodiment, the access network device sends configuration information to a terminal, where the configuration information indicates a third threshold value of the signal transmission quality for the terminals supporting CE in a network supporting CE to perform the SDT in a configured grant based SDT manner; and a fourth threshold value of the signal transmission quality for the terminals not supporting CE in a network supporting CE to perform the SDT in a configured grant based SDT manner; where the third threshold value is smaller than the fourth threshold value. The terminal determines that a small data packet is to be transmitted by the terminal. Based on the configuration information, the terminal determines a threshold value of signal transmission quality for the terminal to perform the SDT. The SDT is performed based on a determination result of whether the terminal supports CE and corresponding threshold values. For example, if the terminal is a terminal supporting CE and measured signal transmission quality of a synchronization signal is less than the third threshold value, the terminal determines to perform data transmission in a non configured grant based SDT manner. Or, in response to the terminal determining that the terminal is a terminal supporting CE and the measured signal transmission quality of the synchronization signal is greater than the third threshold value, the terminal determines to perform data transmission in a configured grant based SDT manner. Or, in response to the terminal determining that the terminal is a terminal not support CE and the measured signal transmission quality of the synchronization signal is less than the fourth threshold value, the terminal determines to perform data transmission in a non configured grant based SDT manner. Or, in response to the terminal determining that the terminal is a terminal not support CE and the measured signal transmission quality of the synchronization signal is greater than the fourth threshold value, the terminal determines to perform data transmission in a configured grant based SDT manner.

In one embodiment, the access network device sends configuration information to a terminal, where the configuration information indicates at least one of the following: a third threshold value of the signal transmission quality for the terminals supporting CE in a network supporting CE to perform the SDT in a configured grant based SDT manner; or fourth threshold value of the signal transmission quality for the terminals not supporting CE in a network supporting CE to perform the SDT in a configured grant based SDT manner; where the third threshold value is smaller than the fourth threshold value. Based on the configuration information, a threshold value of signal transmission quality for the terminal to perform the SDT is determined.

In some embodiments, the configuration information can be sent to the terminal through predetermined signaling.

The predetermined signaling includes one of the following:
remaining minimum system information (RMSI);
a master information block (MIB);
a radio resource control (RRC) message;
other system information (OSI);
downlink control information (DCI); or
a media access control (MAC) control element (CE).

In one embodiment, configuration information is sent to a terminal, where the configuration information includes an indication of a third threshold value and a seven threshold value of the signal transmission quality for the terminals supporting CE in a network supporting CE to perform the SDT in a configured grant based SDT manner. Based on the configuration information, the terminal determines a threshold value of signal transmission quality for the terminal to perform the SDT. In response to the terminal determining that the terminal is a terminal supporting CE and the measured signal transmission quality of the synchronization signal is greater than the third threshold value, the terminal determines to perform data transmission in a configured grant based SDT manner. In response to determining that the measured signal transmission quality of the synchronization signal is less than the seventh threshold value, the terminal enables repetition transmission during performing the SDT in the configured grant based SDT manner. It should be noted that in response to determining that the measured signal transmission quality of the synchronization signal is greater than the seventh threshold value, the terminal disables repetition transmission during performing the SDT in the configured grant based SDT manner. Here, the seventh threshold value is greater than or equal to a threshold value of the signal transmission quality for the terminals not supporting CE to perform the SDT in a configured grant based SDT manner.

It should be noted that those skilled in the art can understand that the methods provided in the embodiments of the present disclosure can be performed separately or together with some methods in the embodiments of the present disclosure or related technologies.

In order to better understand the embodiments of the present disclosure, the technical solution of the present disclosure will be further explained by two exemplary embodiments.

### Example 1

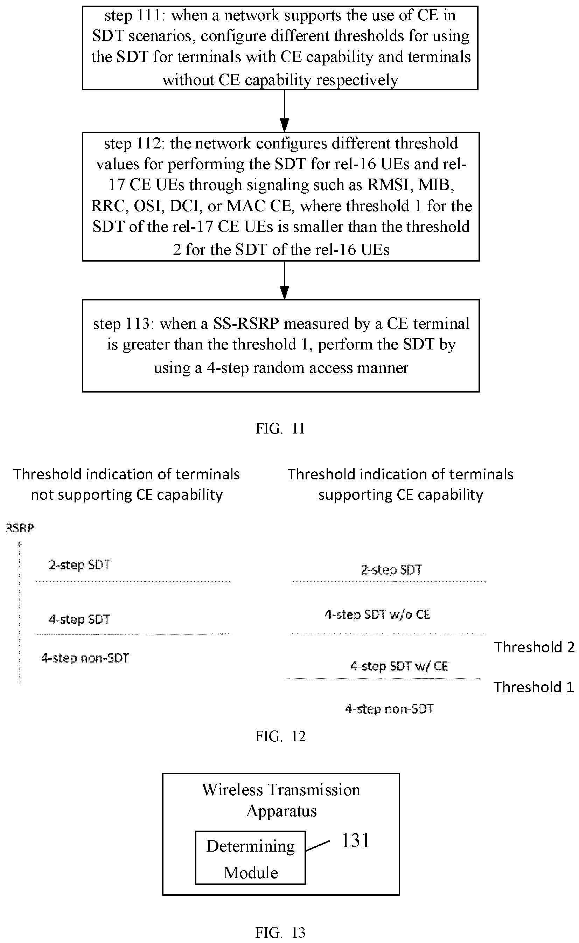

As shown in FIG. 11, this embodiment provides a wireless transmission method, which includes steps 111 to 113.

In step 111, when a network supports the use of coverage enhancement (CE) in SDT scenarios, different thresholds for using the SDT are configured for terminals with CE capability and terminals without CE capability respectively.

In step 112, the network configures different threshold values for performing the SDT for rel-16 UEs and rel-17 CE UEs through signaling such as RMSI, MIB, RRC, OSI, DCI, or MAC CE. The threshold 1 for the SDT of the rel-17 CE UEs is smaller than the threshold 2 for the SDT of the rel-16 UEs.

In step 113, when a SS-RSRP measured by a CE terminal is greater than the threshold 1, the SDT can be performed by using a 4-step random access manner.

It should be noted that, as shown in FIG. 12, when the measured SS-RSRP is less than the threshold 3, the SDT needs to enable the repetition function. Otherwise, the repetition function is not enabled. The value of the threshold 3 can be the threshold 2 for a rel-16 UE to enable the SDT. Or, the value of the threshold 3 can be greater than the threshold 2 for the rel-16 UE to enable the SDT. It should be noted that the above threshold values can be specified as fixed values by a protocol.

It should be noted that for transmission based on group A or group B msg3, the same concept as the SDT in the present disclosure can also be followed. In one embodiment, when the size of msg3 is greater than 56 bits and the RSRP measured by the terminal is less than a predetermined threshold, random access is initiated using preamble resources in the group B. Otherwise, random access is performed using preamble resources in the group A. Therefore, for a rel-17 CE UE, it is also possible to support reducing the RSRP threshold for selecting the group A and the group B during the random access process.

It should be noted that those skilled in the art can understand that the methods provided in the embodiments of the present disclosure can be performed separately or together with some methods in the embodiments of the present disclosure or related technologies.

As shown in FIG. 13, this embodiment provides a wireless transmission apparatus. The apparatus includes a determining module 131.

The determining module 131 is configured to determine, based on configuration information, a threshold value of signal transmission quality for a terminal to perform small data transmission (SDT);
The configuration information indicates the threshold value for at least one type of terminal among terminals supporting coverage enhancement (CE) and terminals not supporting CE in a network supporting CE to perform the SDT.

It should be noted that those skilled in the art can understand that the methods provided in the embodiments of the present disclosure can be performed separately or together with some methods in the embodiments of the present disclosure or related technologies.

As shown in FIG. 13, this embodiment provides a wireless transmission apparatus. The apparatus includes a sending module 141.

The sending module 141 is configured to send configuration information to a terminal.

The configuration information indicates a threshold value for at least one type of terminal among terminals supporting coverage enhancement (CE) and terminals not supporting CE in a network supporting CE to perform small data transmission (SDT).

It should be noted that those skilled in the art can understand that the methods provided in the embodiments of the present disclosure can be performed separately or together with some methods in the embodiments of the present disclosure or related technologies.

The embodiment of the present disclosure provides a communication device including:
one or more processors;
a memory configured to store instructions executable by the one or more processors;
where the one or more processors are configured to implement the method applied to any embodiment of the present disclosure when running the instructions.

The one or more processors can include various types of storage media, which are non-temporary computer storage media and can continue to remember information stored on the communication device after power failure.

The one or more processors can be connected to the memory through a bus or other means to read executable programs stored on the memory.

An embodiment of the present disclosure also provides a computer storage medium, where the computer storage medium stores a computer executable program, and the executable program, when executed by a processor, implements the method in any embodiment of the present disclosure.

Regarding the apparatuses in the above embodiments, the specific way in which each module performs operations has been described in detail in the relevant embodiments of the method, and will not be elaborated here.

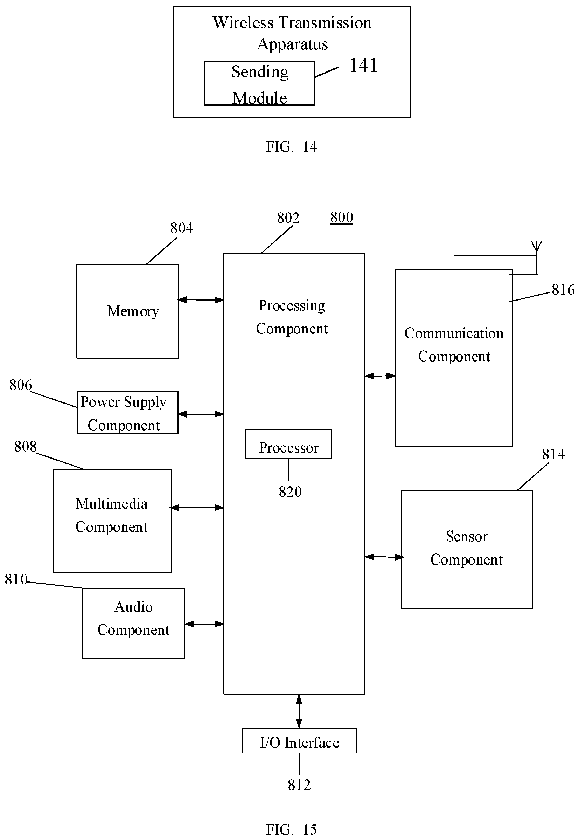

As shown in FIG. 15, an embodiment of the present disclosure provides a structure of a terminal.

As shown in FIG. 15, this embodiment provides a UE 800. The UE 800 can specifically be a mobile phone, a computer, a digital broadcasting terminal, a messaging device, a game console, a tablet device, a medical device, a fitness device, a personal digital assistant, and the like.

Referring to FIG. 15, the UE 800 can include one or more of the following components: a processing component 802, a memory 804, a power supply component 806, a multimedia component 808, an audio component 810, an input/output (I/O) interface 812, a sensor component 814 and a communication component 816.

The processing component 802 generally controls overall operations of the UE 800, such as operations associated with display, phone calls, data communication, camera operations, and recording operations. The processing component 802 can include one or more processors 820 to execute instructions to complete all or part of the steps of the above methods. In addition, the processing component 802 can include one or more modules which facilitate the interaction between the processing component 802 and other components. For example, the processing component 802 can include a multimedia module to facilitate the interaction between the multimedia component 808 and the processing component 802.

The memory 804 is configured to store various types of data to support the operation of the UE 800. Examples of such data include instructions for any application or method operated on the UE 800, contact data, phonebook data, messages, pictures, videos, and so on. The memory 804 can be implemented by any type of volatile or non-volatile storage devices or a combination thereof, such as a Static Random Access Memory (SRAM), an Electrically Erasable Programmable Read Only Memory (EEPROM), an Erasable Programmable Read Only Memory (EPROM), a Programmable Read Only memory (PROM), a Read Only Memory (ROM), a magnetic memory, a flash memory, a magnetic or an optical disk.

The power supply component 806 provides power to various components of the UE 800. The power supply component 806 can include a power management system, one or more power supplies, and other components associated with generating, managing, and distributing power for the UE 800.

The multimedia component 808 includes a screen providing an output interface between the UE 800 and a user. In some examples, the screen may include a liquid crystal display (LCD) and a touch panel (TP). If the screen includes the TP, the screen can be implemented as a touch screen to receive input signals from the user. The TP includes one or more touch sensors to sense touches, swipes, and gestures on the TP. The touch sensor can not only sense a boundary of a touch or swipe, but also sense a lasting time and a pressure associated with the touch or swipe. In some embodiments, the multimedia component 808 can include a front camera and/or a rear camera. The front camera and/or rear camera can receive external multimedia data when the UE 800 is in an operating mode, such as a photographing mode or a video mode. Each of the front camera and the rear camera can be a fixed optical lens system or have focal length and optical zooming capability.

The audio component 810 is configured to output and/or input an audio signal. For example, the audio component 810 includes a microphone (MIC). When the UE 800 is in an operating mode, such as a call mode, a recording mode, and a voice recognition mode, the MIC is configured to receive an external audio signal. The received audio signal may be further stored in the memory 804 or transmitted via the communication component 816. In some embodiments, the audio component 810 further includes a speaker to output an audio signal.

The I/O interface 812 can provide an interface between the processing component 802 and peripheral interface modules. The above peripheral interface modules can include a keyboard, a click wheel, buttons and so on. These buttons can include, but are not limited to, a home button, a volume button, a starting button and a locking button.

The sensor component 814 includes one or more sensors to provide status assessments of various aspects for the UE 800. For example, the sensor component 814 can detect the on/off status of the UE 800, and relative positioning of a component, for example, the component is a display and a keypad of the UE 800. The sensor component 814 may also detect a change in position of the UE 800 or a component of the UE 800, a presence or absence of the contact between a user and the UE 800, an orientation or an acceleration/deceleration of the UE 800, and a change in temperature of the UE 800. The sensor component 814 can include a proximity sensor configured to detect the presence of a nearby object without any physical contact. The sensor component 814 can further include an optical sensor, such as a Complementary Metal Oxide Semiconductor (CMOS) or Charge-coupled Device (CCD) image sensor which is used in imaging applications. In some embodiments, the sensor component 814 can further include an acceleration sensor, a gyroscope sensor, a magnetic sensor, a pressure sensor, or a temperature sensor.

The communication component 816 is configured to facilitate wired or wireless communication between the UE 800 and other devices. The UE 800 can access a wireless network that is based on communication standards, such as Wi-Fi, 2G, 3G, or a combination thereof. In an exemplary embodiment, the communication component 816 receives a broadcast signal or broadcast-associated information from an external broadcast management system via a broadcast channel. In an exemplary embodiment, the communication component 816 further includes a Near Field Communication (NFC) module to facilitate short-range paging. For example, the NFC module can be implemented based on a Radio Frequency Identification (RFID) technology, an Infrared Data Association (IrDA) technology, an Ultra-Wide Band (UWB) technology, a Blue Tooth (BT) technology and other technologies.

In an exemplary embodiment, the UE 800 can be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, or other electronic components for performing the above methods.

In an exemplary embodiment, there is also provided a non-transitory machine readable storage medium including instructions, such as the memory 804 including instructions. The instructions may be executed by the processor 820 of the UE 800 to perform the above methods. For example, the non-transitory machine readable storage medium can be a ROM, a Random Access Memory (RAM), a CD-ROM, a magnetic tape, a floppy disk, an optical data storage device, and the like.

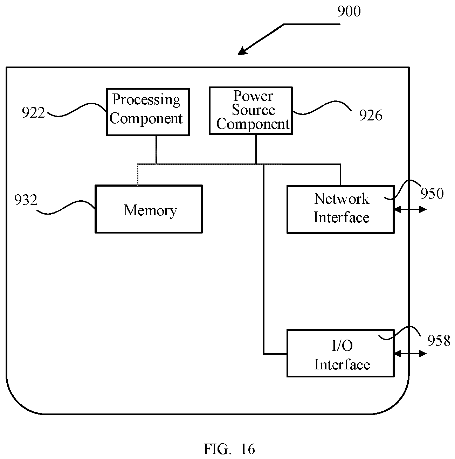

As shown in FIG. 16, an embodiment of the present disclosure illustrates the structure of a base station. For example, the base station 900 can be provided as a network side device. Referring to FIG. 16, the base station 900 includes a processing component 922 which further includes one or more processors, and a memory resource represented by a memory 932, configured to store instructions such as application programs executable by the processing component 922. The application programs stored in the memory 932 can include one or more than one modules, each of which corresponds to a set of instructions. In addition, the processing component 922 is configured to execute the instructions to perform any of the above methods applied to the base station.

The base station 900 can further include a power source component 926 configured to execute power management of the base station 900, a wired or wireless network interface 950 configured to connect the base station 900 to a network, and an I/O interface 958. The base station 900 can be operated on the basis of an operating system stored in the memory 932, such as Windows Server TM, Mac OS XTM, UnixTM, LinuxTM or FreeBSDTM.

Those skilled in the art will readily recognize other embodiments of the present disclosure upon consideration of the specification and practice of the present disclosure disclosed herein. The present disclosure is intended to cover any variations, uses, or adaptations of the present disclosure, which follow general principles of the embodiments of the present disclosure and include common knowledge or customary means in the art that are not disclosed in the present disclosure. The specification and embodiments are exemplary only, with the true scope and spirit of the present disclosure being indicated by the following claims.

It should be understood that the present disclosure is not limited to the precise structure that has been described above and shown in the drawings, and various modifications and changes may be made without departing from the scope thereof. The scope of the present disclosure is limited only by the appended claims.

## Claims

1. A wireless transmission method, performed by a terminal, the method comprising:
based on configuration information, determining a threshold value of signal transmission quality for the terminal to perform small data transmission (SDT);
wherein the configuration information indicates the threshold value for at least one type of terminal among terminals supporting coverage enhancement (CE) and terminals not supporting CE in a network supporting CE to perform the SDT.

2. The method according to claim 1, wherein the configuration information indicates at least one of:
a first threshold value of the signal transmission quality for the terminals supporting CE in a network supporting CE to perform the SDT in a random access based SDT manner;
a second threshold value of the signal transmission quality for the terminals not supporting CE in a network supporting CE to perform the SDT in a random access based SDT manner; wherein the first threshold value is smaller than the second threshold value;
a third threshold value of the signal transmission quality for the terminals supporting CE in a network supporting CE to perform the SDT in a configured grant based SDT manner; or
a fourth threshold value of the signal transmission quality for the terminals not supporting CE in a network supporting CE to perform the SDT in a configured grant based SDT manner; wherein the third threshold value is smaller than the fourth threshold value.

3. The method according to claim 1, wherein the network supporting CE comprises a network supporting transmission of uplink data channels in a repetition manner during the SDT.

4. The method according to claim 1, wherein the terminals supporting CE comprise terminals that at least support transmission of uplink data channels in a repetition sending manner.

5. The method according to claim 1, further comprising:
determining the configuration information based on a communication protocol; or
receiving the configuration information sent by an access network device.

6. The method according to claim 5, wherein receiving the configuration information sent by the access network device comprises:
receiving the configuration information sent by the access network device through predetermined signaling;
wherein the predetermined signaling comprises one of:
remaining minimum system information (RMSI);
a master information block (MIB);
a radio resource control (RRC) message;
other system information (OSI);
downlink control information (DCI); or
a media access control (MAC) control element (CE).

7. The method according to claim 1, wherein the terminal is a terminal supporting CE; and the method further comprises:
in response to determining that the measured signal transmission quality of a synchronization signal is greater than a first threshold value, performing the SDT in a 4-step random access based SDT manner.

8. The method according to claim 7, wherein the configuration information further indicates a fifth threshold value; wherein performing the SDT in the 4-step random access based SDT manner comprises:
in response to determining that the measured signal transmission quality of the synchronization signal is less than the fifth threshold value and a size of a third message (msg3) is greater than a predetermined value, performing random access based on preamble resources in a group B; or
in response to the terminal supporting CE determining that the measured signal transmission quality of the synchronization signal is greater than the fifth threshold value and/or the size of the msg3 is less than the predetermined value, performing random access based on preamble resources in a group A.

9. The method according to claim 7, wherein the terminal is a terminal supporting CE; the configuration information further indicates a sixth threshold value, and the method further comprises:
in response to determining that the measured signal transmission quality of the synchronization signal is less than the sixth threshold value, enabling repetition transmission during performing the SDT in the 4-step random access based SDT manner; or
in response to determining that the measured signal transmission quality of the synchronization signal is greater than the sixth threshold value, disabling repetition transmission during performing the SDT in the 4-step random access based SDT manner.

10. The method according to claim 9, wherein the sixth threshold value is greater than or equal to a threshold value of the signal transmission quality for the terminals not supporting CE to perform the SDT in the 4-step random access based SDT manner.

11. The method according to claim 1, wherein the terminal is a terminal supporting CE; and the method further comprises:
in response to determining that the measured signal transmission quality of a synchronization signal is greater than a third threshold value, performing the SDT in a configured grant based SDT manner.

12. The method according to claim 11, wherein the terminal is a terminal supporting CE; the configuration information further indicates a seventh threshold value, and the method further comprises:
in response to determining that the measured signal transmission quality of the synchronization signal is less than the seventh threshold value, enabling repetition transmission during performing the SDT in the configured grant based SDT manner; or
in response to determining that the measured signal transmission quality of the synchronization signal is greater than the seventh threshold value, disabling repetition transmission during performing the SDT in the configured grant based SDT manner.

13. The method according to claim 12, wherein the seventh threshold value is greater than or equal to a threshold value of the signal transmission quality for the terminals not supporting CE to perform the SDT in the configured grant based SDT manner.

14. A wireless transmission method, performed by an access network device, the method comprising:
sending configuration information to a terminal;
wherein the configuration information indicates a threshold value for at least one type of terminal among terminals supporting coverage enhancement (CE) and terminals not supporting CE in a network supporting CE to perform small data transmission (SDT).

15. The method according to claim 14, wherein the configuration information indicates at least one of:
a first threshold value of the signal transmission quality for the terminals supporting CE in a network supporting CE to perform the SDT in a random access based SDT manner;
a second threshold value of the signal transmission quality for the terminals not supporting CE in a network supporting CE to perform the SDT in a random access based SDT manner; wherein the first threshold value is smaller than the second threshold value;
a third threshold value of the signal transmission quality for the terminals supporting CE in a network supporting CE to perform the SDT in a configured grant based SDT manner; or
a fourth threshold value of the signal transmission quality for the terminals not supporting CE in a network supporting CE to perform the SDT in a configured grant based SDT manner; wherein the third threshold value is smaller than the fourth threshold value.

16. The method according to claim 14, wherein the network supporting CE comprises a network supporting transmission of uplink data channels in a repetition manner during the SDT.

17. The method according to claim 14, wherein the terminals supporting CE comprise terminals that at least support transmission of uplink data channels in a repetition sending manner.

18. The method according to claim 14, wherein sending the configuration information to the terminal comprises:
sending the configuration information to the terminal through predetermined signaling;
wherein the predetermined signaling comprises one of:
remaining minimum system information (RMSI);
a master information block (MIB);
a radio resource control (RRC) message;
other system information (OSI);
downlink control information (DCI); or
a media access control (MAC) control element (CE).

19. The method according to claim 14, wherein the configuration information further indicates a fifth threshold value; wherein the fifth threshold value is a threshold value for the terminals supporting CE to select a group of preamble resources for performing random access; wherein the group of preamble resources comprises a group A and a group B.

20. The method according to claim 14, wherein the configuration information further indicates a sixth threshold value; wherein the sixth threshold value is a threshold value for the terminals supporting CE to enable or disable repetition transmission during performing the SDT in a 4-step random access based SDT manner.

21. The method according to claim 20, wherein the sixth threshold value is greater than or equal to a threshold value of the signal transmission quality for the terminals not supporting CE to perform the SDT in the 4-step random access based SDT manner.

22. The method according to claim 14, wherein the configuration information further indicates a seventh threshold value; wherein the seventh threshold value is a threshold value for the terminals supporting CE to enable or disable repetition transmission during performing the SDT in a configured grant based SDT manner.

23. The method according to claim 22, wherein the seventh threshold value is greater than or equal to a threshold value of the signal transmission quality for the terminals not supporting CE to perform the SDT in the configured grant based SDT manner.

24. A wireless transmission apparatus, comprising:
a determining module, configured to determine, based on configuration information, a threshold value of signal transmission quality for a terminal to perform small data transmission (SDT);
wherein the configuration information indicates the threshold value for at least one type of terminal among terminals supporting coverage enhancement (CE) and terminals not supporting CE in a network supporting CE to perform the SDT.

25. A wireless transmission apparatus, comprising:
a sending module, configured to send configuration information to a terminal;
wherein the configuration information indicates a threshold value for at least one type of terminal among terminals supporting coverage enhancement (CE) and terminals not supporting CE in a network supporting CE to perform small data transmission (SDT).

26. A communication device, comprising:
a memory; and
one or more processors, connected to the memory, configured to execute computer executable instructions stored on the memory to implement the method according to any one of claims 1 to 13 or 14 to 23.

27. A computer storage medium storing computer executable instructions that, when executed by a processor, implement the method according to any one of claims 1 to 13 or 14 to 23.
